# EUROPEAN PATENT APPLICATION

(11) **EP 4 428 813 A1**
(43) Date of publication of application: **11.09.2024**
(21) Application number: 24158336.8
(22) Date of filing: 19.02.2024
(51) Int. Cl.: G06T 7/00, G06T 7/11, G06T 7/62

(54) **OBSERVATION METHOD AND OBSERVATION APPARATUS**

(30) Priority: 10.03.2023 JP 2023037281
(71) Applicant: SCREEN Holdings Co., Ltd., Kyoto-shi, Kyoto 602-8585 (JP)
(72) Inventor: HASEBE, Ryo, Kyoto-shi, 602-8585 (JP)
(74) Representative: Goddar, Heinz J.

(57) **Abstract**

First, a biological sample is imaged, and a photographic image in which intensity values are distributed is acquired. After that, a localization region corresponding to an unusual part is extracted from the photographic image. At that time, a region of which intensity value satisfies a predetermined requirement in the photographic image is extracted as the localization region. Alternatively, the photographic image is input to a trained model created in advance, and a localization region output from the trained model is obtained. In this manner, the localization region corresponding to the unusual part can be extracted from the photographic image of the biological sample. This enables noninvasive observation of the unusual part of the biological sample without processing a cell by staining or the like.

## Description

### BACKGROUND OF THE INVENTION

### Field of the Invention

The present invention relates to an observation method and an observation apparatus for a biological sample.

### Description of the Background Art

There is conventionally known an observation apparatus that images a biological sample with a plurality of cells by optical coherence tomography (OCT), and observes the biological sample on the basis of the obtained tomographic image.

Such a conventional observation apparatus as mentioned above is described in, for example, Japanese Patent Application Publication No. 2015-181348. With the use of this type of observation apparatus, it is possible to noninvasively observe a three-dimensional structure of a biological sample.

A biological sample such as a spheroid includes an unusual part in which the status of cells is different from that in the other parts, in some cases. For example, during a culture process, cells in a spheroid may possibly necrose due to insufficient nourishment to the inner portion of the spheroid. Meanwhile, in the field of regenerative medicine, in which a biological sample is formed by combination of multiple kinds of cells, certain kinds of cells out of the multiple kinds of cells may possibly be localized on the outer side or the inner side of the biological sample. Further, in a biological sample obtained from stem cells for regenerative medicine, differentiated cells may possibly be localized in a part of the biological sample. In quality control of the biological sample, it is very important to observe those unusual parts.

As a conventional method for observing an unusual part in a biological sample, a method of observing a tissue section stained using a fluorescent reagent is known. However, to process a cell by staining or the like would cause damage to the cell. Hence, there is a demand for a technology for observing an unusual part of a biological sample in a natural culture condition as it is.

### SUMMARY OF THE INVENTION

An object of the present invention is to provide an observation method and an observation apparatus that make it possible to noninvasively observe an unusual part of a biological sample without processing a cell by staining or the like.

The first aspect is directed to an observation method for a biological sample including an unusual part in which a condition of a cell is different from that in the other parts, and the method includes the steps of a) imaging the biological sample and acquiring a photographic image in which intensity values are distributed; and b) extracting a localization region corresponding to the unusual part from the photographic image, wherein, in the step b), a region of which intensity value satisfies a predetermined requirement in the photographic image is extracted as the localization region.

According to the present disclosure, the localization region corresponding to the unusual part can be extracted from the photographic image of the biological sample. This enables noninvasive observation of the unusual part of the biological sample without processing the cell by staining or the like.

Preferably, the step b) includes the steps of b-1) extracting an entire region corresponding to the biological sample from the photographic image; b-2) extracting a high-intensity region of which intensity value is higher than a predetermined threshold value in the entire region; and b-3) extracting a region that is left after the high-intensity region and a region inner than the high-intensity region are excluded from the entire region, as the localization region.

This enables accurate extraction of the localization region corresponding to the unusual part extending in the outer surface of the biological sample.

The second aspect is directed to an observation method for a biological sample including an unusual part in which a condition of a cell is different from that in the other parts, and the method includes the steps of a) imaging the biological sample and acquiring a photographic image in which intensity values are distributed; and b) inputting the photographic image to a trained model configured to receive an image of the biological sample as input information and produce a localization region corresponding to the unusual part as output information, to acquire the localization region output from the trained model.

Preferably, the observation method further includes the step of creating the trained model configured to receive an image of the biological sample as input information and produce a localization region corresponding to the unusual part as output information, by deep learning.

Preferably, the observation method further includes the step of calculating a size of the unusual part on the basis of the localization region, after the step b).

This enables evaluation of the condition of the biological sample based on the size of the unusual part.

Preferably, the observation method further includes the step of calculating a size ratio of the unusual part to the entire biological sample on the basis of the localization region, after the step b).

This enables evaluation of the condition of the biological sample based on a size ratio of the unusual part to the entire biological sample.

The unusual part may be a part in which the cell has necrosed.

The biological sample includes multiple kinds of cells, and the unusual part may be a part in which a specific kind of cells are localized.

The unusual part may be a part in which the cell is differentiated.

Preferably, in the step a), the biological sample is imaged by optical coherence tomography.

The third aspect is directed to an observation apparatus for a biological sample including an unusual part in which a condition of a cell is different from that in the other parts, and the apparatus includes: an image acquisition unit configured to image the biological sample and acquire a photographic image in which intensity values are distributed; and a region extraction unit configured to extract a localization region corresponding to the unusual part from the photographic image, wherein the region extraction unit extracts a region of which intensity value satisfies a predetermined requirement in the photographic image, as the localization region.

The fourth aspect is directed to an observation apparatus for a biological sample including an unusual part in which a condition of a cell is different from that in the other parts, and the apparatus includes: a storage unit in which a trained model that is created by deep learning and is configured to receive an image of the biological sample as input information and produce a localization region corresponding to the unusual part as output information, is stored; an image acquisition unit configured to image the biological sample and acquire a photographic image in which intensity values are distributed; and a region extraction unit configured to input the photographic image to the trained model, to acquire the localization region output from the trained model.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a configuration of an observation apparatus;
Fig. 2 is a control block diagram of the observation apparatus;
Fig. 3 is a block diagram conceptually showing functions of a computer;
Figs. 4A to 4C are views schematically showing examples of a biological sample;
Fig. 5 is a flowchart showing a flow of an observation process;
Fig. 6 is a view schematically showing a tomographic image;
Fig. 7 is a flowchart showing an example of a procedure for extracting a localization region;
Fig. 8 is a view schematically showing a result of extraction of an entire region;
Fig. 9 is a view schematically showing a result of extraction of a localization region;
Fig. 10 is a flowchart showing a flow from spheroid formation to tissue formation;
Fig. 11 is a flowchart showing a flow of an evaluation process;
Fig. 12 is a graph showing a result of Experiment 1;
Fig. 13 is a graph showing a result of Experiment 2; and
Fig. 14 is a flowchart showing a flow of an observation process in a case in which a trained model is used.

### DESCRIPTION OF THE PREFERRED EMBODIMENTS

Hereinafter, preferred embodiments of the present invention will be described with reference to the drawings.

### <1. Configuration of Observation Apparatus>

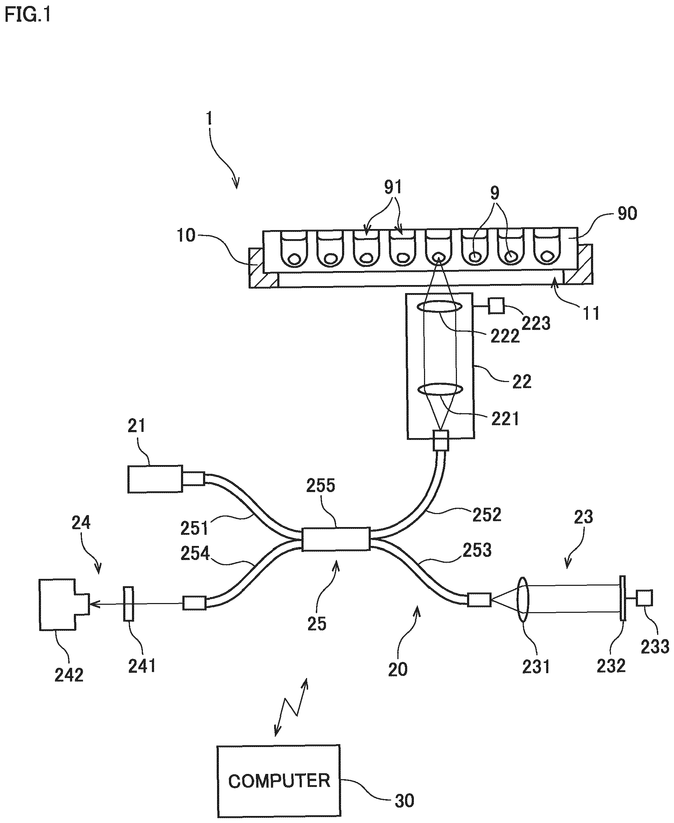

Fig. 1 is a diagram showing a configuration of an observation apparatus 1 according to one preferred embodiment of the present invention. The observation apparatus 1 is an apparatus that takes an image of a biological sample 9 held in a sample holder 90 and evaluates the condition of the biological sample 9 on the basis of the acquired image. The biological sample 9 is a cell aggregate such as a spheroid or an organoid including multiple kinds of cells. The biological sample 9 may be, for example, a cell aggregate obtained from stem cells for regenerative medicine, or may be an embryo formed as a result of cleavage of a fertilized egg. Alternatively, the biological sample 9 may be a tumor tissue used for screening in drug discovery.

As shown in Fig. 1, the observation apparatus 1 includes a stage 10, an imaging unit 20, and a computer 30.

The stage 10 is a support plate that supports the sample holder 90. For the sample holder 90, for example, a well plate is used. The well plate consists of multiple wells (recessed portions) 91. Each of the wells 91 has a U-shaped or V-shaped bottom. The biological sample 9, together with a culture medium, is held near the bottom of each well 91. For a material of the sample holder 90, transparent resin or glass that transmits light is used.

The stage 10 includes an opening 11 that vertically penetrates. The sample holder 90 is horizontally supported while being fit in the opening 11 of the stage 10. Thus, the lower surface of the sample holder 90 is exposed toward the imaging unit 20 without being covered by the stage 10.

The imaging unit 20 is a unit that images the biological sample 9 in the sample holder 90. The imaging unit 20 is placed below the sample holder 90 supported by the stage 10. The imaging unit 20 of the present preferred embodiment is an optical coherence tomography (OCT) device capable of imaging the biological sample 9 to produce a tomographic image and a three-dimensional image thereof.

As shown in Fig. 1, the imaging unit 20 includes a light source 21, an object optical system 22, a reference optical system 23, a detection unit 24, and an optical fiber coupler 25. The optical fiber coupler 25 includes first to fourth optical fibers 251 to 254 connected at a connecting unit 255. The light source 21, the object optical system 22, the reference optical system 23, and the detection unit 24 are connected to each other via optical paths formed by the optical fiber coupler 25.

The light source 21 includes a light emitting element such as an LED. The light source 21 emits low-coherence light including a wide range of wavelength components. In order to allow light to reach the inside of the biological sample 9 without invasively treating the biological sample 9, it is desirable that light emitted from the light source 21 is a near-infrared ray. The light source 21 is connected to the first optical fiber 251. Light emitted from the light source 21 is incident on the first optical fiber 251 and is separated into light incident on the second optical fiber 252 and light incident on the third optical fiber 253 at the connecting unit 255.

The second optical fiber 252 is connected to the object optical system 22. Light traveling from the connecting unit 255 to the second optical fiber 252 is incident on the object optical system 22. The object optical system 22 includes a plurality of optical components including a collimator lens 221 and an object lens 222. Light emitted from the second optical fiber 252 passes through the collimator lens 221 and the object lens 222, and is applied to the biological sample 9 in the sample holder 90. At that time, the object lens 222 causes the light to converge to the biological sample 9. Then, light reflected from the biological sample 9 (hereinafter referred to as "observation light") passes through the object lens 222 and the collimator lens 221 and is again incident on the second optical fiber 252.

As shown in Fig. 1, the object optical system 22 is connected to a scan mechanism 223. The scan mechanism 223 slightly moves the object optical system 22 vertically and horizontally in accordance with an instruction from the computer 30. Thus, the incidence position of light on the biological sample 9 can be slightly moved vertically and horizontally.

Further, the imaging unit 20 can be moved horizontally by a movement mechanism not shown. Thus, the field of view of the imaging unit 20 can be changed among the multiple wells 91.

The third optical fiber 253 is connected to the reference optical system 23. Light travelling from the connecting unit 255 to the third optical fiber 253 is incident on the reference optical system 23. The reference optical system 23 includes a collimator lens 231 and a mirror 232. Light emitted from the third optical fiber 253 passes through the collimator lens 231 and is incident on the mirror 232. Then, light reflected from the mirror 232 (hereinafter referred to as "reference light") passes through the collimator lens 231 and is again incident on the third optical fiber 253.

As shown in Fig. 1, the mirror 232 is connected to a retraction mechanism 233. The retraction mechanism 233 slightly moves the mirror 232 in an optical-axis direction in accordance with an instruction from the computer 30. Thus, the optical-path length of the reference light can be changed.

The fourth optical fiber 254 is connected to the detection unit 24. The observation light that is incident on the second optical fiber 252 from the object optical system 22 and the reference light that is incident on the third optical fiber 253 from the reference optical system 23 join together at the connecting unit 255, and are incident on the fourth optical fiber 254. Then, light emitted from the fourth optical fiber 254 is incident on the detection unit 24. At that time, interference is caused between the observation light and the reference light due to a phase difference therebetween. The optical spectrum of interference light at that time varies with the height of reflection position of the observation light.

The detection unit 24 includes a spectroscope 241 and a light detector 242. The interference light emitted from the fourth optical fiber 254 is dispersed into each wavelength component in the spectroscope 241, and is incident on the light detector 242. The light detector 242 detects each dispersed interference light, and outputs its corresponding detection signal to the computer 30.

The image acquisition unit 41 described later in the computer 30 performs Fourier transform on the detection signal provided from the light detector 242, to thereby calculate a vertical light-intensity distribution of the observation light. Further, the image acquisition unit 41 repeats the above-described calculation of light-intensity distribution while the object optical system 22 is horizontally moved by the scan mechanism 223, to thereby calculate a light-intensity distribution of the observation light at each coordinate position in a three-dimensional space. Consequently, the computer 30 can acquire a tomographic image and a three-dimensional image of the biological sample 9.

A tomographic image is formed of multiple pixels arranged on two-dimensional coordinates, and is data in which each pixel has a predetermined intensity value. A three-dimensional image is formed of multiple voxels arranged on three-dimensional coordinates and is data in which each voxel has a predetermined intensity value. That is, each of a tomographic image and a three-dimensional image is a photographic image in which intensity values are distributed on predetermined coordinates.

The computer 30 functions as a control unit that controls the operation of the imaging unit 20. Further, the computer 30 functions as a data processing unit that produces a tomographic image and a three-dimensional image on the basis of a detection signal input from the imaging unit 20 and evaluates the condition of the biological sample 9 on the basis of the acquired tomographic image and three-dimensional image.

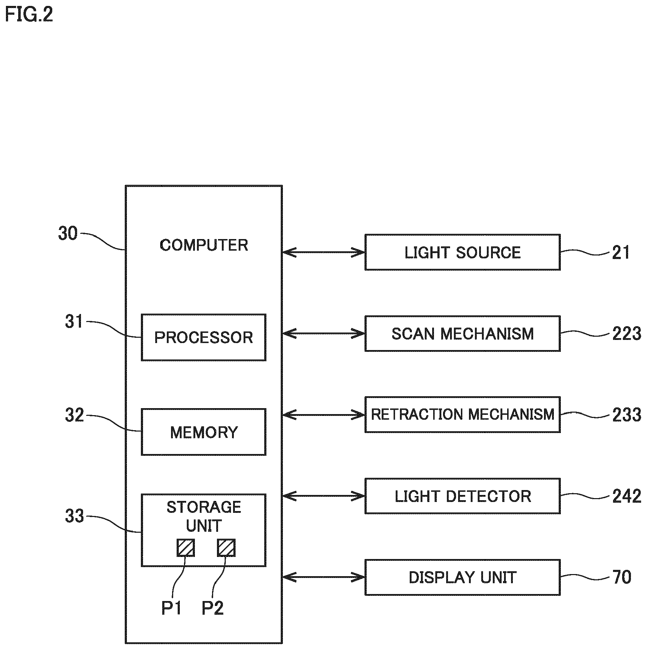

Fig. 2 is a control block diagram of the observation apparatus 1. As conceptually shown in Fig. 2, the computer 30 includes as a processor 31 such as a CPU, a memory 32 such as a RAM, and a storage unit 33 such as a hard disk drive. In the storage unit 33, a control program P1 for controlling the operations of respective components in the observation apparatus 1 and a data processing program P2 for producing a tomographic image and a three-dimensional image and evaluating the condition of the biological sample 9, are stored.

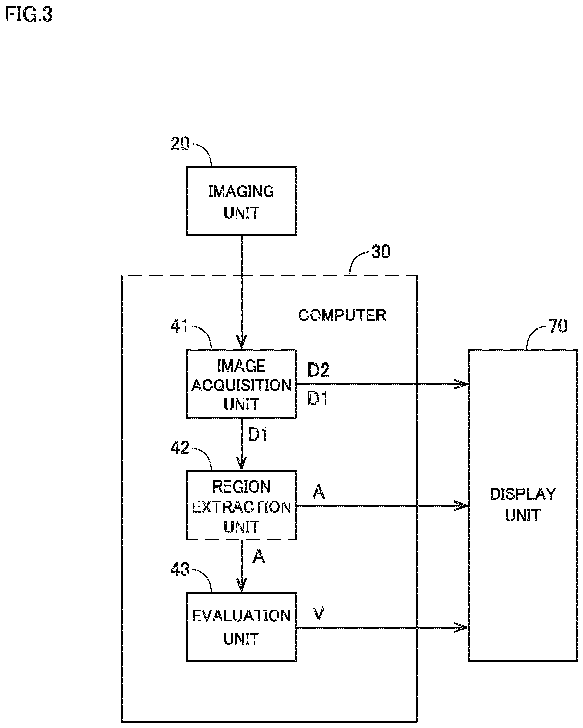

Further, as shown in Fig. 3, the computer 30 is connected to the light source 21, the scan mechanism 223, the retraction mechanism 233, and the light detector 242 that have been described above, and to a display unit 70 described later such that the computer 30 can conduct communication with each of those components. The computer 30 controls the operations of the above-described respective components in accordance with the control program P1. Thus, a imaging process of the biological sample 9 held in the sample holder 90 proceeds.

Fig. 3 is a block diagram conceptually showing the functions of the computer 30 for observing the biological sample 9. As shown in Fig. 3, the computer 30 includes the image acquisition unit 41, a region extraction unit 42, and an evaluation unit 43. The respective functions of the image acquisition unit 41, the region extraction unit 42, and the evaluation unit 43 are performed by an operation of the processor 31 of the computer 30 in accordance with the data processing program P2 described above. Details of processes performed by the image acquisition unit 41, the region extraction unit 42, and the evaluation unit 43 will be given later.

### <2. First Preferred Embodiment>

Next, a first preferred embodiment of a process using the above-described observation apparatus 1 is described. In the first preferred embodiment, the biological sample 9 is observed and evaluated using the above-described observation apparatus 1.

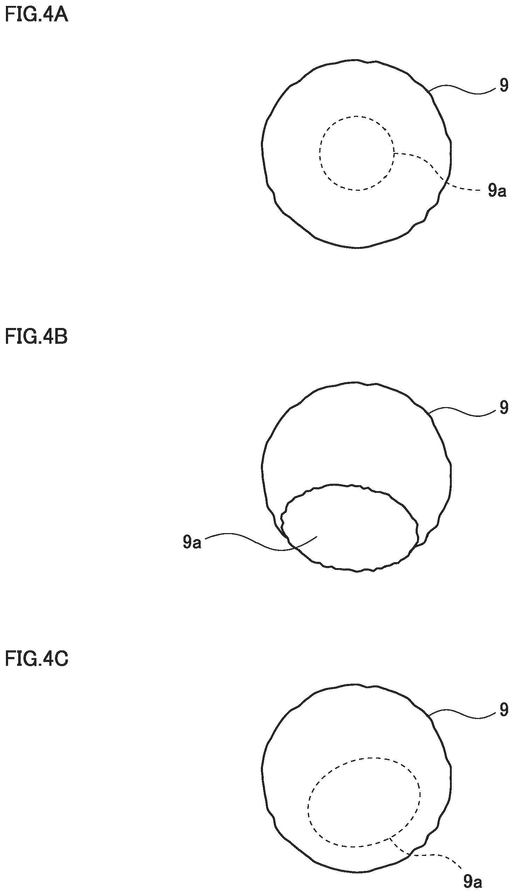

Figs. 4A to 4C are views schematically showing examples of the biological sample 9 that is an object to be observed in the following description. The biological sample 9 shown in each of Figs. 4A to 4C includes an unusual part 9a that is an object to be evaluated. The unusual part 9a is a part of the biological sample 9 in which the condition of cells is different from that in the other parts.

For example, in a spheroid as the biological sample 9, cells necrose during a culture process in some cases. In such a case, a part that has necrosed in the biological sample 9 can be regarded as the unusual part 9a as shown in Fig. 4A. Alternatively, in the field of regenerative medicine, in which the biological sample 9 is formed by combination of multiple kinds of cells, certain kinds of cells out of the multiple kinds of cells are localized on the outer side or the inner side of the biological sample 9 in some cases. In such a case, the part in which a specific kind of cells are localized can be regarded as the unusual part 9a as shown in Fig. 4B. Further alternatively, when the biological sample 9 obtained from stem cells for regenerative medicine is cultured, a part of cells are differentiated in some cases. In such a case, a part in which cells are differentiated can be regarded as the unusual part 9a as shown in Fig. 4C. Still further alternatively, the unusual part 9a may be a region where a spheroid is fibrosed.

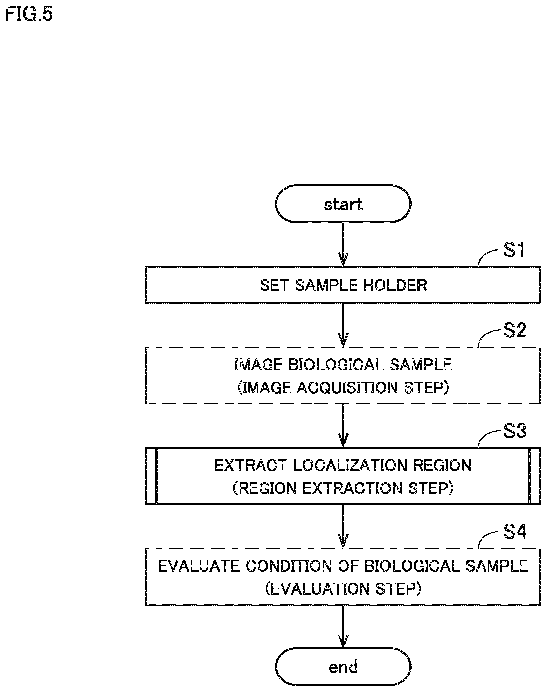

Fig. 5 is a flowchart showing a flow of an observation process. In observing the biological sample 9 in the observation apparatus 1, first, the sample holder 90 is set on the stage 10 (step S1). In the sample holder 90, the biological sample 9, together with a culture medium, is held.

Secondly, the observation apparatus 1 images the biological sample 9 with the use of the imaging unit 20 (step S2, image acquisition step). In the present preferred embodiment, the imaging unit 20 images by optical coherence tomography. Specifically, the light source 21 is caused to emit light, and interference light of observation light and reference light is detected for each wavelength component by the light detector 242 while the object optical system 22 is slightly moved by the scan mechanism 223. The image acquisition unit 41 of the computer 30 calculates a light-intensity distribution at each coordinate position of the biological sample 9 on the basis of a detection signal output from the light detector 242. Consequently, a tomographic image D1 and a three-dimensional image D2 of the biological sample 9 are acquired.

The observation apparatus 1 acquires a plurality of tomographic images D1 and one three-dimensional image D2 for one biological sample 9. Further, the observation apparatus 1 repeats the process of the step S2 while changing the well 91 to be imaged, to thereby acquire the tomographic images D1 and the three-dimensional images D2 of multiple biological samples 9. The acquired tomographic images D1 and three-dimensional images D2 are stored in the storage unit 33 of the computer 30. Moreover, the computer 30 displays the acquired tomographic images D1 and three-dimensional images D2 on the display unit 70.

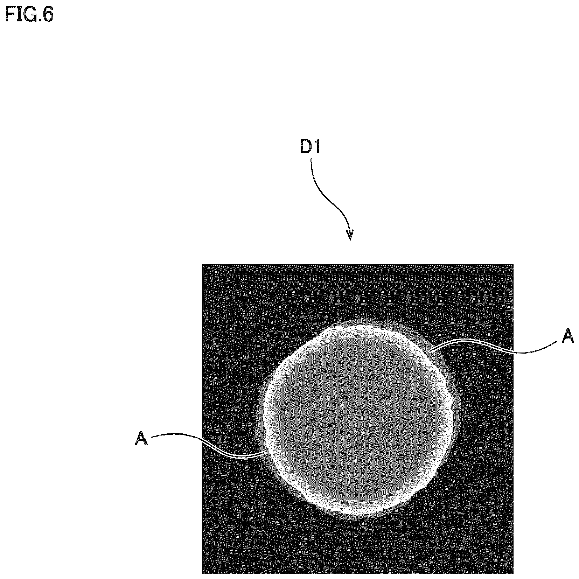

Fig. 6 is a view schematically showing the tomographic image D1. In the example of Fig. 6, there is a region corresponding to the unusual part 9a (hereinafter referred to as a "localization region A") in the outer edge of the biological sample 9 having a substantially spherical shape. The region extraction unit 42 of the computer 30 extracts the localization region A from the tomographic image D1 (step S3, region extraction step).

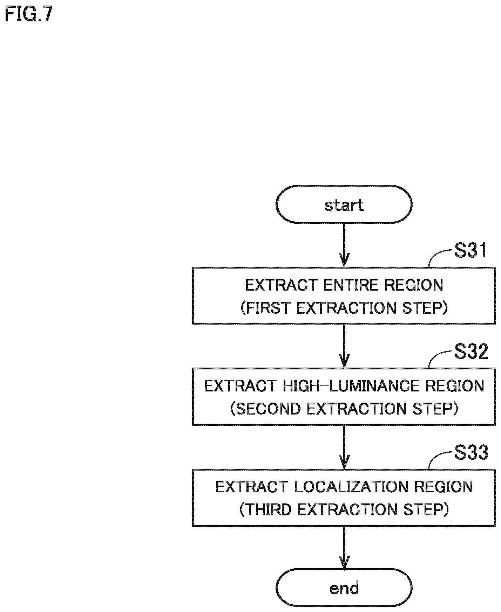

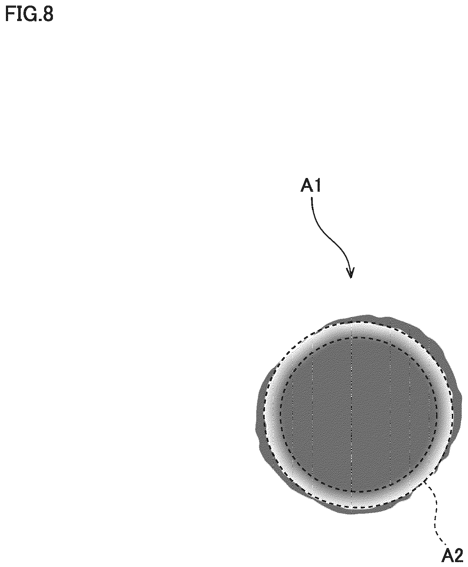

Fig. 7 is a flowchart showing an example of a procedure for extracting the localization region A. In the example of Fig. 7, first, the region extraction unit 42 extracts an entire region A1 corresponding to the entire biological sample 9 from the tomographic image D1 (step S31, first extraction step). Specifically, the region extraction unit 42 extracts a region having an intensity value higher than a first threshold value set in advance in the tomographic image D1, as the entire region A1. Fig. 8 is a view schematically showing a result of extraction of the entire region A1.

Secondly, the region extraction unit 42 extracts a region having an intensity value higher than a predetermined second threshold value from the entire region A1, as a high-intensity region A2 (step S32, second extraction step). Note that the second threshold value is higher than the first threshold value. In Fig. 8, the high-intensity region A2 having a ring shape is indicated by a broken line. The outer edge of a cell aggregate having a substantially spherical shape has a strong tendency to have a high intensity. For this reason, in the step S32, the high-intensity region A2 is extracted, so that the outer edge of the cell aggregate having a substantially spherical shape is defined.

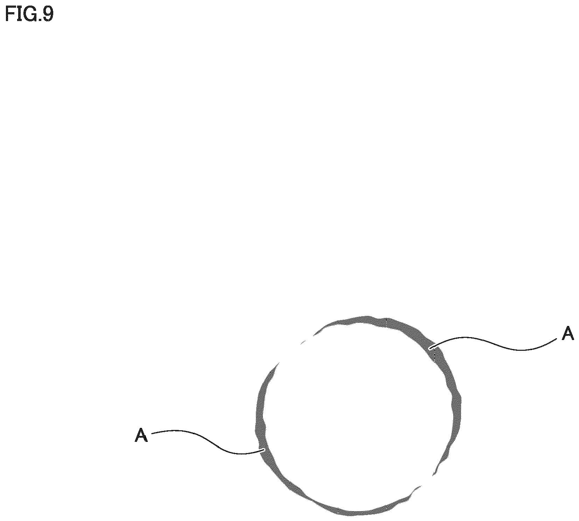

Subsequently, the region extraction unit 42 extracts a region that is left after the high-intensity region A2 and a region inner than the high-intensity region A2 are excluded from the entire region A1, as the localization region A (step S33, third extraction step). Fig. 9 is a view schematically showing a result of extraction of the localization region A. Thus, the localization region A corresponding to the unusual part 9a extending in the outer surface of the cell aggregate having a spherical shape can be appropriately extracted.

In this manner, in the step S3, a region of which intensity value satisfies a predetermined requirement in the tomographic image D1 is extracted as the localization region A. The procedure for extracting the localization region A is not necessarily required to be the same as the above-described steps S31 to S33. The region extraction unit 42 is only required to extract the localization region A by following an appropriate procedure depending on the position or the intensity value of the localization region A.

After that, the evaluation unit 43 of the computer 30 evaluates the condition of the biological sample 9 on the basis of the localization region A extracted in the step S3 (step S4, evaluation step). In the step S4, the evaluation unit 43 calculates the size of the unusual part 9a on the basis of the localization region A. More specifically, the evaluation unit 43 calculates the area of the localization region A. The area of the localization region A can be calculated on the basis of the number of pixels included in the localization region A, for example.

Alternatively, in a case in which a plurality of tomographic images D1 are acquired for one biological sample 9, the evaluation unit 43 may calculate the volume of the unusual part 9a on the basis of the areas of the respective localization regions A in the plurality of tomographic images D1. Further alternatively, the evaluation unit 43 may calculate the ratio of the size (area or volume) of the unusual part 9a to the entire biological sample 9 on the basis of the localization region A.

The evaluation unit 43 evaluates the condition of the biological sample 9 on the basis of the size of the unusual part 9a or the size ratio of the unusual part 9a that has been calculated. For example, in a case in which a condition where cells are uniformly distributed is desirable, the smaller the size or the ratio of the unusual part 9a is, the more highly the evaluation unit 43 evaluates the condition of the biological sample 9.

Meanwhile, the size ratio of the unusual part 9a to an entire spheroid that is the biological sample 9 and the amount of protein secreted from the spheroid show a correlation therebetween in some cases. Specifically, the smaller the ratio of the unusual part 9a is, the larger the secretion amount of protein is, in some cases. In such a case, the evaluation unit 43 may calculate the secretion amount of protein on the basis of the calculated size ratio of the unusual part 9a.

The size (area or volume) of the unusual part 9a, the ratio of the unusual part 9a, or the secretion amount of protein that has been calculated by the evaluation unit 43 is stored in the storage unit 33, as an evaluation value V Further, the evaluation unit 43 displays the evaluation value V on the display unit 70.

As described above, the observation apparatus 1 can image the biological sample 9 by optical coherence tomography and extract the localization region A corresponding to the unusual part 9a of the biological sample 9 from the acquired tomographic image D1. This enables noninvasive observation of the unusual part 9a of the biological sample 9 without processing cells by staining or the like. Further, by calculating the size of the unusual part 9a, it is possible to easily evaluate the quality of the biological sample 9.

### <3. Second Preferred Embodiment>

### <3-1. Formation Step, Observation and Evaluation Step, Tissue Formation Step>

Next, a second preferred embodiment of the process using the above-described observation apparatus 1 is described. In the second preferred embodiment, a spheroid that is the biological sample 9 (hereinafter referred to as a "spheroid 9") is formed, the biological sample 9 is observed and evaluated using the above-described observation apparatus 1, and further, a tissue is formed using the formed spheroid 9.

For the spheroid 9, a spheroid including various kinds of cells such as a main tissue and a nervous tissue can be used. Preferably, the spheroid 9 can be used as a material in a bio 3D printer.

In any spheroid including multiple kinds of cells, irrespective of which tissue is an origin of the cells included in the spheroid, the cells can possibly be non-uniformly distributed, to cause localization of a specific kind of cells in a part of the spheroid. This affects gene expression or protein secretion of the spheroid in some cases. Hence, it is required to evaluate whether or not multiple kinds of cells are uniformly distributed in the spheroid 9, preferably, whether or not multiple kinds of cells are distributed uniformly enough to be applied to formation of a structure for regenerative medicine using a bio 3D printer, or for in vitro evaluation, or the like.

The spheroid 9 can be obtained through co-culture of two or more kinds of cells by a known method in accordance with a requirement such as a purpose of use, a kind of cell, or a ratio.

The spheroid 9 is preferably a so-called liver spheroid. A liver spheroid is a cell aggregate including two or more kinds of cells including a liver parenchymal cell (hepatocyte) among multiple kinds of cells composing a liver. A liver spheroid can include any cell originated from a liver, in addition to a liver parenchymal cell, and may include, for example, a hepatic sinusoidal endothelial cell, a Kupffer cell, a hepatic stellate cell, a pit cell, a bile duct epithelial cell, a mesothelial cell, and the like.

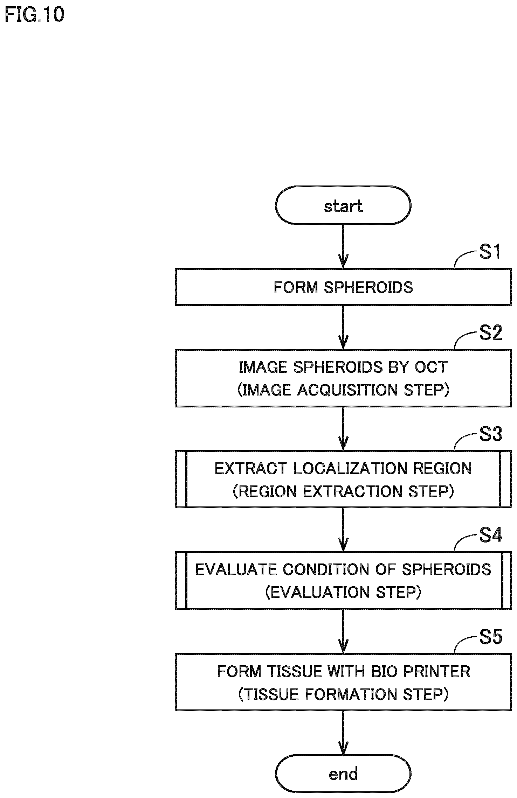

Fig. 10 is a flowchart showing a flow from formation of the spheroid 9 to tissue formation. In performing an observation and evaluation step of the spheroid 9 using the observation apparatus 1 and a tissue formation step using a bio 3D printer, first, many spheroids 9 are formed (step S1, spheroid formation step). Then, the formed spheroids 9 are put in the sample holder 90. Note that the spheroids 9 may be formed within the sample holder 90, or the spheroids 9 having been formed in a separate culture vessel may be put in the sample holder 90. At that time, in the sample holder 90, multiple spheroids 9, together with a culture medium, are held.

Secondly, the sample holder 90 is set on the stage 10 of the observation apparatus 1, and the spheroid 9 is imaged with the use of imaging unit 20 (step S2, image acquisition step). In the step S2, the imaging unit 20 images by optical coherence tomography in the same manner as in the above-described first preferred embodiment. Thus, the tomographic image D1 and the three-dimensional image D2 of the spheroid 9 are acquired.

The observation apparatus 1 acquires a plurality of tomographic images D1 and one three-dimensional image D2 for one spheroid 9. Further, the observation apparatus 1 repeats the process of the step S2 while changing the well 91 to be imaged, to acquire the tomographic images D1 and the three-dimensional images D2 of the multiple spheroids 9. The acquired tomographic images D1 and three-dimensional images D2 are stored in the storage unit 33 of the computer 30. Moreover, the computer 30 display the acquired tomographic images D1 and three-dimensional images D2 on the display unit 70.

Subsequently, the region extraction unit 42 of the computer 30 extracts the localization region A from the tomographic image D1 (step S3, region extraction step). In the step S3, the entire region A1 and the localization region A are extracted, for example, by the procedure in Fig. 7 in the same manner as in the above-described first preferred embodiment.

After that, the evaluation unit 43 of the computer 30 evaluates the condition of the spheroid 9 on the basis of the localization region A extracted in the step S3 (step S4, evaluation step). In the step S4, the evaluation unit 43 analyzes the unusual part 9a of the spheroid 9 in the tomographic image D1 and the three-dimensional image D2, and evaluates the condition of the spheroid 9.

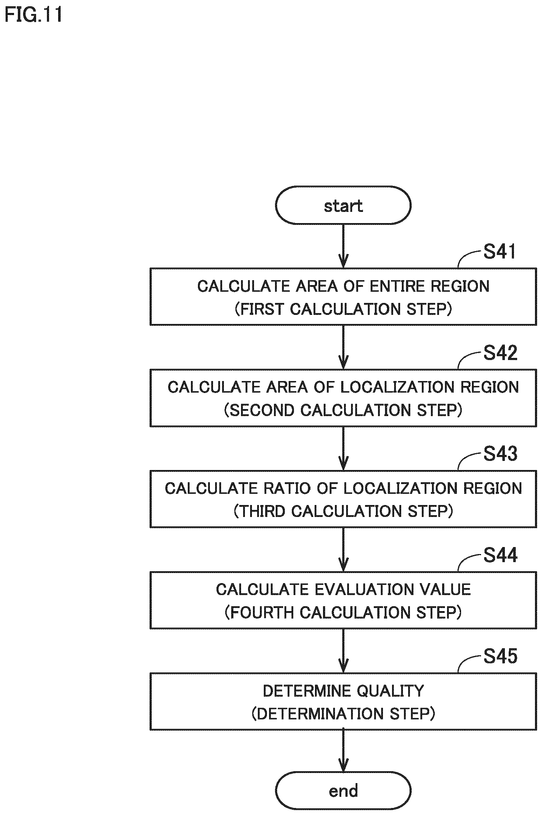

Fig. 11 is a flowchart showing an example of a flow of the evaluation step of evaluating the condition of the spheroid 9 in the step S4. In the example of the evaluation step in Fig. 11, the condition of the spheroid 9 is evaluated on the basis of the area of the localization region A in the tomographic image D1 that is a photographic image.

In the example of Fig. 11, first, the evaluation unit 43 calculates the area of the entire spheroid 9 in the tomographic image D1 (step S41, first calculation step). Specifically, the evaluation unit 43 calculates the area of the entire region A1 in the tomographic image D1. The area of the entire region A 1 can be calculated on the basis of, for example, the number of pixels included in the entire region A1.

Secondly, the evaluation unit 43 calculates the area of the localization region A in the tomographic image D1 (step S42, second calculation step). Specifically, the evaluation unit 43 calculates the area of the localization region A in the tomographic image D1. The area of the localization region A can be calculated on the basis of, for example, the number of pixels included in the localization region A.

Subsequently, the evaluation unit 43 calculates the ratio of the localization region A corresponding to the unusual part 9a on the basis of the area of the entire spheroid 9 calculated in the first calculation step of the step S41 and the area of the localization region A calculated in the second calculation step of the step S42 (step S43, third calculation step). The ratio calculated in the step S43 may be, for example, an area ratio (a result of division of the area of the localization region A by the area the entire region A 1) in one representative tomographic image D1.

Meanwhile, for example, in a case in which a plurality of tomographic images D1 are acquired for one spheroid 9, the ratio of the localization region calculated in the third calculation step of the step S43 may be a volume ratio. In this case, the respective volumes of the entire spheroid 9 and the localization region are calculated on the basis of the respective areas of the entire region A1 and the localization region A in each of the plurality of tomographic images D1, first. Then, a ratio of the localization region is calculated by division of the volume of the localization region A by the volume of the entire spheroid 9.

After that, the evaluation unit 43 calculates the evaluation value V (step S44, fourth calculation step). The evaluation value V is calculated on the basis of the ratio of the localization region A calculated in the third calculation step of the step S43. The evaluation value V is, for example, an estimated value of a degree of predetermined gene expression or an estimated value of the secretion amount of predetermined protein in the spheroid 9 as shown in Experiment 2 described later. The estimated value in either case is calculated on the basis of the ratio of the localization region A. In a case in which the spheroid 9 is a liver spheroid, the amount of protein CYP3A4 secreted from the spheroid 9 is used as the evaluation value V, for example.

As the evaluation value V, the ratio of the localization region A calculated in the third calculation step of the step S43 may be directly used. However, by using, as the evaluation value V, a parameter that directly shows whether or not the spheroid exhibits a required behavior as a part of tissue, such as an estimated value of a degree of predetermined gene expression or an estimated value of a secretion amount of predetermined protein, it is possible to obtain the evaluation value V that is easier for a user to grasp.

The evaluation unit 43 determines the quality of the spheroid 9 on the basis of the calculated evaluation value V (step S45, determination step). For example, when the evaluation value V is equal to or larger than a predetermined threshold value, or is equal to or smaller than a predetermined threshold value, it is determined that the spheroid 9 is suitable as a material of a bio 3D printer. Otherwise, it is determined that the spheroid 9 is not suitable as a material of a bio 3D printer.

For example, in a case in which the evaluation value V is exactly equal to a ratio of a localization region and the purpose is to select a healthy spheroid suitable for regenerative medicine or hepatotoxicity evaluation, it is preferable to determine a spheroid of which evaluation value V is equal to or smaller than the predetermined threshold value as "excellent", and determine a spheroid of which evaluation value V is larger than the predetermined threshold value as "unacceptable".

In a case in which an estimated value of a degree of predetermined gene expression or an estimated value of a secretion amount of predetermined protein in a spheroid, calculated on the basis of a ratio of the localization region A, is used as the evaluation value V, it is preferable to determine a spheroid of which evaluation value V is equal to or larger than a predetermined lower-limit threshold value and is equal to or smaller than a predetermined upper-limit threshold value, as "excellent", depending on the kind of a gene or protein, the composition of the spheroid, the purpose of use of the spheroid, or the like.

The size (area or volume) of the localization region A, a ratio of the localization region A, and the evaluation value V that are calculated by the evaluation unit 43 are stored in the storage unit 33. Further, the evaluation unit 43 displays the evaluation value V on the display unit 70.

As described above, in the observation apparatus 1, the spheroid 9 is imaged by optical coherence tomography, and the localization region A corresponding to the unusual part 9a of the spheroid 9 can be extracted from the acquired tomographic image D1. This enables noninvasive observation of the unusual part 9a of the spheroid 9. Further, the evaluation value V based on the ratio of the unusual part 9a is calculated, which makes it possible to easily evaluate whether the spheroid 9 is suitable or unsuitable as a material of a bio 3D printer.

The image acquisition step of the step S2, the region extraction step of the step S3, and the evaluation step of the step S4 described above are performed on each of many spheroids 9 having been formed. Then, tissue formation is performed with, for example, a bio 3D printer, using the spheroids 9 that have been determined as a suitable material of a bio 3D printer in the evaluation step of the step S4 (step S5, tissue formation step). In this manner, a high-quality tissue suitable for use in, for example, hepatotoxicity evaluation, can be obtained.

### < 3-2. Experiment 1>

In order to confirm the detection accuracy of a localization region in a tomographic image (hereinafter referred to as an "OCT image") acquired by optical coherence tomography in the evaluation method of the second preferred embodiment, an area ratio of a localization region in a liver spheroid was calculated by the following two methods.

### (First Method: Calculating Area Ratio of Localization Region from OCT Image)

Multiple liver spheroids were imaged using optical coherence tomography by the method described in the above-described embodiment, and OCT images (tomographic images) were acquired. A localization region was extracted from a randomly-selected image out of the acquired OCT images, and a value obtained by division of the localization region by an entire region was calculated as an area ratio.

### (Second Method: Calculating Area Ratio of Localization Region from Stained Tissue-Section Image)

The multiple liver spheroids having been imaged using optical coherence tomography by the first method were stained using a fluorescent reagent, and were each cut along a randomly-selected section. In the cut surface, a localization region was extracted by the conventional method, and a value obtained by division of the localization region by an entire region was calculated as an area ratio.

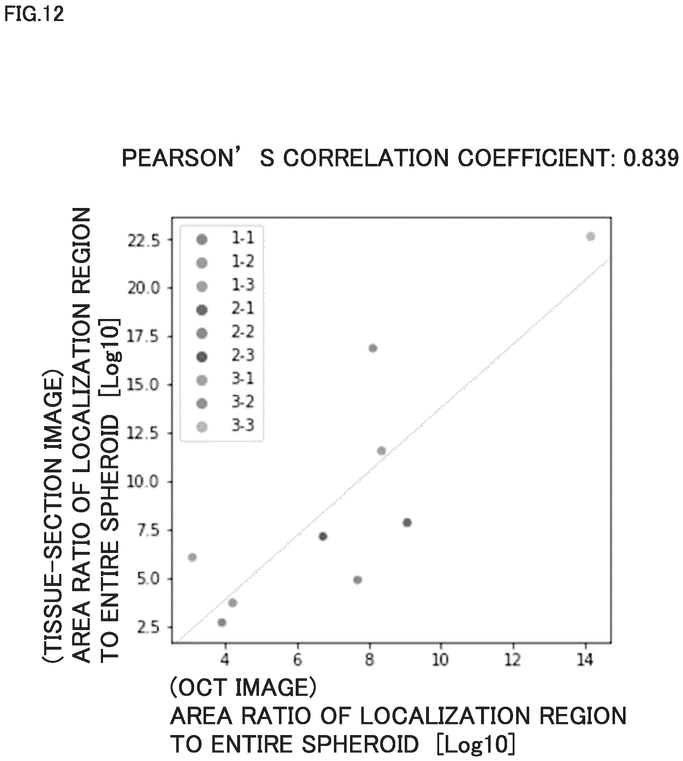

Fig. 12 shows a result of Experiment 1, and is a graph showing a relationship between the area ratio of the localization region calculated from the image (OCT image) acquired by optical coherence tomography and the area ratio of the localization region calculated from the stained tissue-section image, for the liver spheroids.

As shown in Fig. 12, Pearson's product-moment correlation coefficient between the area ratio of the localization region calculated from the OCT image acquired by optical coherence tomography and the area ratio calculated from the stained tissue-section image according to the conventional method was 0.839. This means that the area ratio of the localization region calculated from the OCT image acquired by optical coherence tomography has an adequate correlation with the area ratio calculated from the stained tissue-section image according to the conventional method. Therefore, it can be considered that the method of calculating an area ratio of a localization region from an OCT image acquired by optical coherence tomography can calculate an area ratio with accuracy similar to that of the conventional method.

### <3-3. Experiment 2>

In order to confirm the reliability of an estimated value for the evaluation value V in a case in which an estimated value of a degree of predetermined gene expression or an estimated value of a secretion amount of predetermined protein is used as the evaluation value V in the evaluation method of the second preferred embodiment, an experiment was conducted by the following method.

First, multiple liver spheroids were imaged using optical coherence tomography by the method described in the above-described preferred embodiment, and OCT images (tomographic images) were acquired. A localization region was extracted from a randomly-selected image out of the acquired OCT images, and a value obtained by division of the localization region by an entire region was calculated as an area ratio.

Meanwhile, the enzyme activity of protein CYP3A4 secreted from each of the multiple liver spheroids having been imaged by optical coherence tomography was measured. Note that, for each of the liver spheroids, either imaging by optical coherence tomography or measurement of the enzyme activity of protein CYP3A4 may be performed earlier.

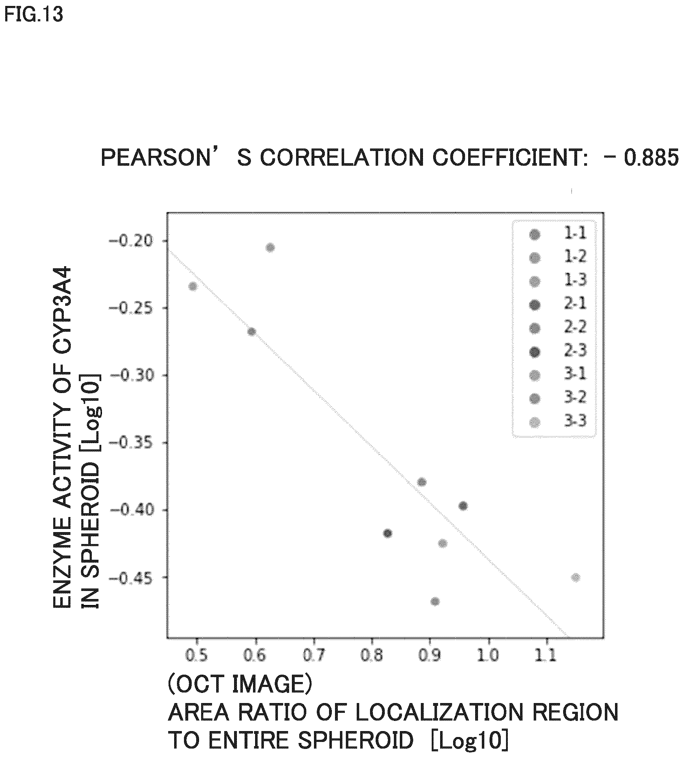

Fig. 13 shows a result of Experiment 2, and is a graph showing a relationship between the area ratio of the localization region calculated from the OCT image and the enzyme activity of CYP3A4, for the liver spheroids. As shown in Fig. 13, Pearson's product-moment correlation coefficient between the area ratio of the localization region in each liver spheroid, calculated from the OCT image, and the enzyme activity of CYP3A4, was - 0.885. Between the area ratio of the localization region in each liver spheroid, calculated from the OCT image, and the enzyme activity of CYP3A4, a high (negative) correlation can be found. Therefore, it can be said that, when the enzyme activity of CYP3A4 is estimated on the basis of an area ratio of a localization region calculated from an OCT image for a liver spheroid, the resultant estimated value has sufficient reliability.

### <4. Modifications>

Hereinabove, the first preferred embodiment and the second preferred embodiment of the present invention have been described, but the present invention is not limited to the above-described preferred embodiments.

### <4-1. First Modification>

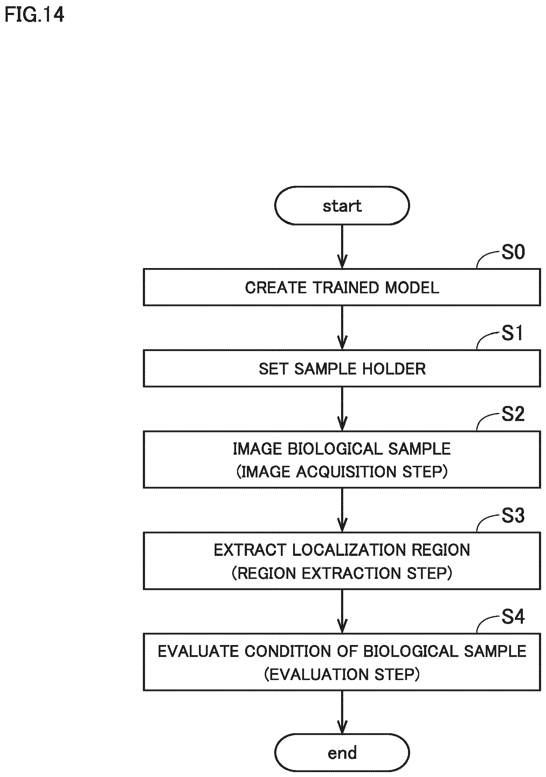

According to the above-described first preferred embodiment, in the step S3, the region extraction unit 42 extracts a region of which intensity value satisfies a predetermined requirement in the tomographic image D1, as the localization region A. Alternatively, in the step S3, the region extraction unit 42 may extract the localization region A by using a trained model. Fig. 14 is a flowchart showing a flow of an observation process in a case in which a trained model is used.

In the example of Fig. 14, first, the computer 30 creates a trained model by deep learning (step S0, training step). The trained model is an input/output device configured to receive the tomographic image D1 of the biological sample 9 as input information and produce the localization region A corresponding to the unusual part 9a in the tomographic image D1 as output information. The computer 30 creates the trained model in accordance with a supervised machine learning algorithm by using a number of the tomographic images D1 prepared in advance and the localization regions A included in the tomographic images D1, as training data. The trained model is stored in the storage unit 33. For the machine learning algorithm, semantic segmentation can be used, for example, but the machine learning algorithm is not limited thereto.

After the trained model is created, the sample holder 90 is set on the stage 10 (step S1), and the biological sample 9 is imaged (step S2, image acquisition step), in the same manner as in the above-described preferred embodiment. Subsequently, the region extraction unit 42 of the computer 30 extracts the localization region A corresponding to the unusual part 9a from the tomographic image D1 acquired by imaging (step S3). Specifically, the region extraction unit 42 inputs the tomographic image D1 acquired in the step S2 to the trained model created in the step S0. As a result of this, the localization region A is output from the trained model. This makes it possible to obtain the localization region A without performing processes such as the steps S31 to S33 described above.

Further, also in the above-described second preferred embodiment, the localization region A may be extracted by using the trained model in the step S3 in the same manner.

### <4-2. Second Modification>

The above-described first preferred embodiment has discussed a case in which the localization region A is extracted from the tomographic image D1. Alternatively, the localization region A may be extracted from the three-dimensional image D2. In a case in which the three-dimensional image D2 is used for region extraction, a three-dimensional region corresponding to the unusual part 9a is extracted from three-dimensional coordinates forming the three-dimensional image D2, as the localization region A, in the step S3 described above. The extraction method in this case may be region extraction based on an intensity value, like that in the above-described preferred embodiments, or may be region extraction using a trained model, like that in the above-described first modification.

Further, also in the above-described second preferred embodiment, the localization region A may be extracted from the three-dimensional image D2 in the same manner.

### <4-3. Other Modifications>

Meanwhile, according to the above-described preferred embodiments, the imaging unit 20 images by optical coherence tomography (OCT). Alternatively, the imaging unit may acquire a tomographic image or a three-dimensional image of a biological sample by other imaging methods.

Further, according to the above-described preferred embodiments, the sample holder 90 is a well plate including the multiple wells (recessed portions) 91, and each of the wells 91 holds one biological sample 9. Alternatively, one well may hold multiple biological samples. In such a case, one image may include regions respectively corresponding to the multiple biological samples. Further alternatively, the sample holder that holds a biological sample may be a dish having only one recessed portion.

Moreover, the respective elements described in the above-described preferred embodiments and modifications may be appropriately combined unless contradiction occurs.

While the invention has been shown and described in detail, the foregoing description is in all aspects illustrative and not restrictive. It is therefore understood that numerous modifications and variations can be devised without departing from the scope of the invention.

## Claims

1. An observation method for a biological sample (9) including an unusual part (9a) in which a condition of a cell is different from that in the other parts, the method comprising the steps of
a) imaging the biological sample (9) and acquiring a photographic image in which intensity values are distributed (S2); and
b) extracting a localization region (A) corresponding to the unusual part (9a) from the photographic image (S3), wherein,
in the step b), a region of which intensity value satisfies a predetermined requirement in the photographic image is extracted as the localization region (A).

2. The observation method according to claim 1, wherein the step b) includes the steps of:
b-1) extracting an entire region (A1) corresponding to the biological sample (9) from the photographic image (S31);
b-2) extracting a high-intensity region (A2) of which intensity value is higher than a predetermined threshold value in the entire region (A1)(S32); and
b-3) extracting a region that is left after the high-intensity region (A2) and a region inner than the high-intensity region (A2) are excluded from the entire region (A1), as the localization region (A) (S33).

3. An observation method for a biological sample (9) including an unusual part (9a) in which a condition of a cell is different from that in the other parts, the method comprising the steps of
a) imaging the biological sample (9) and acquiring a photographic image in which intensity values are distributed (S2); and
b) inputting the photographic image to a trained model configured to receive an image of the biological sample (9) as input information and produce a localization region (A) corresponding to the unusual part (9a) as output information, to acquire the localization region (A) output from the trained model (S3).

4. The observation method according to claim 3, further comprising the step of creating the trained model configured to receive an image of the biological sample (9) as input information and produce a localization region (A) corresponding to the unusual part (9a) as output information, by deep learning (S0).

5. The observation method according to any of claims 1 to 4, further comprising the step of calculating a size of the unusual part (9a) on the basis of the localization region (A), after the step b) (S4).

6. The observation method according to any of claims 1 to 4, further comprising the step of calculating a size ratio of the unusual part (9a) to the entire biological sample (9) on the basis of the localization region (A), after the step b) (S4).

7. The observation method according to any of claims 1 to 6, wherein the unusual part (9a) is a part in which the cell has necrosed.

8. The observation method according to any of claims 1 to 6, wherein
the biological sample (9) includes multiple kinds of cells, and
the unusual part (9a) is a part in which a specific kind of cells are localized.

9. The observation method according to any of claims 1 to 6, wherein the unusual part (9a) is a part in which the cell is differentiated.

10. The observation method according to any of claims 1 to 9, wherein, in the step a), the biological sample (9) is imaged by optical coherence tomography.

11. An observation apparatus (1) for a biological sample (9) including an unusual part (9a) in which a condition of a cell is different from that in the other parts, the apparatus comprising:
an image acquisition unit (41) configured to image the biological sample (9) and acquire a photographic image in which intensity values are distributed; and
a region extraction unit (42) configured to extract a localization region (A) corresponding to the unusual part (9a) from the photographic image, wherein
the region extraction unit (42) extracts a region of which intensity value satisfies a predetermined requirement in the photographic image, as the localization region (A).

12. An observation apparatus for a biological sample (9) including an unusual part (9a) in which a condition of a cell is different from that in the other parts, the apparatus comprising:
a storage unit in which a trained model that is created by deep learning and is configured to receive an image of the biological sample (9) as input information and produce a localization region (A) corresponding to the unusual part (9a) as output information, is stored;
an image acquisition unit (41) configured to image the biological sample (9) and acquire a photographic image in which intensity values are distributed; and
a region extraction unit (42) configured to input the photographic image to the trained model, to acquire the localization region (A) output from the trained model.
